# EUROPÄISCHE PATENTANMELDUNG

(11) **EP 4 491 897 A1**
(43) Veröffentlichungstag der Anmeldung: **15.01.2025**
(21) Anmeldenummer: 23185365.6
(22) Anmeldetag: 13.07.2023
(51) Int. Cl.: F16C 33/66, F16C 33/72, F16C 35/04, F16C 41/00

(54) **FLANSCHLAGERGEHÄUSE SOWIE VERFAHREN ZUM REINIGEN UND/ODER SPÜLEN EINES SOLCHEN FLANSCHLAGERGEHÄUSE**

(71) Anmelder: NORDISCHER MASCHINENBAU RUD. BAADER GMBH + CO KG, 23560 Lübeck (DE)
(72) Erfinder: Malm, Jost Phillipp, 23560 Lübeck (DE)
(74) Vertreter: Stork Bamberger Patentanwälte PartmbB

(57) **Zusammenfassung**

Die Erfindung betrifft ein Flanschlagergehäuse (10), ausgebildet und eingerichtet zum Lagern und Dichten von rotierenden Wellen (14) innerhalb von Vorrichtungen der nahrungsmittelverarbeitenden Industrie, insbesondere der Fisch- und Geflügelverarbeitung, umfassend einen als im Wesentlichen hohlzylindrischen Rotationskörper ausgebildeten Grundkörper (11), einen innerhalb des Grundkörpers (11) ausgebildeten Lagerraum (12), ausgebildet und eingerichtet zur Aufnahme mindestens eines Lagers (13) sowie einer zu lagernden und zu dichtenden Welle (14), das mindestens eine Lager (13), mindestens ein im Lagerraum (12) am Grundkörper (11) angeordnetes oder ausgebildetes erstes Sicherungsmittel (15) als Anschlag für das Lager (13), mindestens ein weiteres am Grundkörper (11) angeordnetes oder ausgebildetes zweites Sicherungsmittel (16) zum Sichern des Lagers (13) gegen das erste Sicherungsmittel (15), sowie mindestens einen Wellendichtring (17), wobei der oder jeder Wellendichtring (17) auf der dem Lager (13) abgewandten Seite des jeweiligen Sicherungsmittels (15) angeordnet ist, das sich dadurch auszeichnet, dass mindestens zwei Schmierbohrungen (20) im Grundkörper (11) ausgebildet sind, die den Lagerraum (13) mit der Umgebung (U) verbinden, wobei die Schmierbohrungen (20) beabstandet zueinander, vorzugsweise diametral einander gegenüberliegend, am Umfang des Grundkörpers (11) angeordnet und ausgebildet sind, und die oder jede Schmierbohrung (20) bedarfsweise zu öffnen und schließbar ausgebildet ist. Die Erfindung betrifft weiterhin ein Verfahren zum Reinigen und/oder Spülen einer aus einer in einem Flanschlagergehäuse (10) nach einem der Ansprüche 1 bis 10 gelagerten Welle (14) gebildeten Anordnung (32).

## Beschreibung

Die Erfindung betrifft ein Flanschlagergehäuse, ausgebildet und eingerichtet zum Lagern und Dichten von rotierenden Wellen innerhalb von Vorrichtungen der nahrungsmittelverarbeitenden Industrie, insbesondere der Fisch- und Geflügelverarbeitung, umfassend einen als im Wesentlichen hohlzylindrischen Rotationskörper ausgebildeten Grundkörper, einen innerhalb des Grundkörpers ausgebildeten Lagerraum, ausgebildet und eingerichtet zur Aufnahme mindestens eines Lagers sowie einer zu lagernden und zu dichtenden Welle, das mindestens eine Lager, mindestens ein im Lagerraum am Grundkörper angeordnetes oder ausgebildetes erstes Sicherungsmittel als Anschlag für das Lager, mindestens ein weiteres am Grundkörper angeordnetes oder ausgebildetes zweites Sicherungsmittel zum Sichern des Lagers gegen das erste Sicherungsmittel, sowie mindestens einen Wellendichtring, wobei der oder jeder Wellendichtring auf der dem Lager abgewandten Seite des jeweiligen Sicherungsmittels angeordnet ist.

Des Weiteren betrifft die Erfindung ein Verfahren zum Reinigen und/oder Spülen einer aus einer in einem Flanschlagergehäuse nach einem der Ansprüche 1 bis 10 gelagerten Welle gebildeten Anordnung.

Solche Flanschlagergehäuse kommen in Vorrichtungen der nahrungsmittelverarbeitenden Industrie zum Einsatz, um rotierend angetriebene Wellen zu lagern und zu dichten. Der Grundkörper weist parallel zur Mittelachse einen Durchgangskanal auf, der letztlich den Lagerraum bildet. Der Durchgangskanal kann an beiden Stirnseiten geöffnet sein, um eine Welle aufzunehmen, die zu beiden Stirnseiten aus dem Grundkörper herausragt. Der Durchgangskanal kann aber auch an einer der beiden Stirnseiten durch einen Blinddeckel geschlossen sein, so dass die Welle je nach Einbauposition nur aus einer der Stirnseiten aus dem Flanschlagergehäuse ragt. Die Sicherungsmittel dienen dazu, das jeweilige Lager im Durchgangskanal in Position zu halten. Sie können integraler Bestandteil des Grundkörpers sein, also im Grundkörper ausgebildet sein. Optional können die Sicherungsmittel auch als separate Komponenten dem Grundkörper zugeordnet sein. Das erstes Sicherungsmittel kann dazu z.B. lösbar im Lagerraum am Grundkörper befestigt sein, z.B. als ein Federring in einer Nut. Das zweite Sicherungsmittel kann ebenfalls lösbar sein, z.B. in Form eines Federringes, oder das zweite Sicherungsmittel ist als Befestigungsscheibe ausgebildet, insbesondere abhängig davon, ob ein Blinddeckel vorgesehen ist oder nicht. Das Lager ist somit sandwichartig zwischen zwei Sicherungsmitteln angeordnet und in Position gehalten. Abhängig vom Anwendungsfall, insbesondere wie die Welle in dem Flanschlagergehäuse gelagert ist, sind ein Wellendichtring oder zwei Wellendichtringe vorgesehen, um den Lagerraum gegenüber der Umgebung abzudichten. Die Wellendichtringe sind jeweils auf der dem Lagerraum abgewandten Seite des Sicherungsmittels angeordnet. Eine Dichtlippe des Wellendichtrings ist in Richtung des Sicherungsmittels gerichtet, derart, dass das Austreten von Schmiermedium aus dem Lagerraum in Richtung der Umgebung verhindert ist. Trotz dieser Dichtung des Lagerraums durch Wellendichtring und/oder Blinddeckel kommt es im Betrieb der Flanschlagergehäuse zu Verunreinigungen im Bereich der Wellendichtringe und innerhalb des Lagerraums.

Ein Flanschlagergehäuse mit dem Lager kann als Festlager oder Loslager verwendet werden. Im Weiteren können für unterschiedlicher technische Anwendungen unterschiedliche Lager innerhalb der Flanschlagergehäuse eingesetzt werden, also z.B. Gleitlager, Rillenkugellager, Pendelrollenlager und dergleichen. Jedes Lager muss üblicherweise mit einem Schmiermedium geschmiert werden, weshalb jedes Flanschlagergehäuse eine Schmierbohrung aufweist, über die manuell oder mindestens teilweise automatisiert Schmiermedium an das Lager im Lagerraum zugeführt werden kann. Der oder jeder Wellendichtring bzw. auch ein Blinddeckel verhindern dabei das Austreten von Schmiermedium aus dem Lagerraum in die Umgebung. In regelmäßigen Abständen müssen die Flanschlagergehäuse bzw. mindestens Teile davon, nämlich beispielsweise der Wellendichtring, mit dem der Lagerraum gegenüber der Umgebung abgedichtet ist, gereinigt werden, um Verunreinigungen, die sich unter dem Wellendichtring bilden, zu entfernen. Auch das Spülen des Lagerraums ist in Abständen notwendig, um Verunreinigungen innerhalb des Lagerraums zu entfernen.

Für unterschiedliche technische Anwendungsfälle in unterschiedlichen Einbaupositionen sind jeweils angepasste Flanschlagergehäuse ausgebildet, um zum einen als Festlager oder Loslager verwendet zu werden, um eine durch das Flanschlagergehäuse durchgehende Welle oder eine von der einen oder der anderen Seite in das Flanschlagergehäuse eingesetzte Welle zu lagern und zu dichten, und um zum anderen auch an unterschiedliche Lagerarten und deren Einbauposition angepasst zu sein. Insbesondere auch die unterschiedlichen Einbaupositionen innerhalb der Vorrichtungen, z.B. bezüglich der Stirnseite, mit der das Flanschlagergehäuse an eine Gehäusewand oder dergleichen angeflanscht wird, erfordern unterschiedliche Flanschlagergehäuse, um ausreichend Freiraum für das Schmieren einerseits und das Reinigen und/oder Spülen andererseits zu schaffen. Das führt dazu, dass unterschiedliche Flanschlagergehäuse mit unterschiedlichen Lagern vorgehalten werden müssen, die an die jeweiligen Erfordernisse und die entsprechenden Einbaupositionen angepasst sind. Das ist durch die erforderliche Teilevielfalt in der Herstellung und in der Logistik kostenintensiv. Im Übrigen sind die bekannten Flanschlagergehäuse nur bedingt in der nahrungsmittelverarbeitenden Industrie einsetzbar, da sie starken Verunreinigungen durch die zu verarbeitenden Produkte ausgesetzt sind. Insbesondere in der fisch- und geflügelverarbeitenden Industrie kommt es jedoch darauf an, hygienische Lösungen für die Flanschlagergehäuse zu schaffen, um Ablagerungen der in der Vorrichtung verarbeiteten Produkte am Flanschlagergehäuse zu vermeiden.

Der Erfindung liegt somit die Aufgabe zugrunde, ein Flanschlagergehäuse zu schaffen, das für unterschiedliche Anwendungsfälle und in unterschiedlichen Einbaupositionen in Vorrichtungen der nahrungsmittelverarbeitenden Industrie universell einsetzbar und einfach zu reinigen ist. Die Aufgabe besteht weiterhin darin, ein Verfahren zum einfachen und zuverlässigen Reinigen und/oder Spülen solcher Flanschlagergehäuse vorzuschlagen.

Diese Aufgabe wird durch ein eingangs genanntes Flanschlagergehäuse dadurch gelöst, dass mindestens zwei Schmierbohrungen im Grundkörper ausgebildet sind, die den Lagerraum mit der Umgebung verbinden, wobei die Schmierbohrungen beabstandet zueinander, vorzugsweise diametral einander gegenüberliegend, am Umfang des Grundkörpers angeordnet und ausgebildet sind, und die oder jede Schmierbohrung bedarfsweise zu öffnen und schließbar ausgebildet ist. Die beiden Schmierbohrungen können über den Umfang verteilt in jedem Abstand zueinander angeordnet und ausgebildet sein. Besonders bevorzugt beträgt der Abstand in Umfangsrichtung jedoch etwa 180°, so dass sich die Schmierbohrungen diametral einander gegenüberliegen. Durch zwei Schmierbohrungen in einem Abstand zueinander besteht die Möglichkeit, eine universelle Zugänglichkeit zu schaffen, da wahlweise die eine Schmierbohrung oder die andere Schmierbohrung oder sogar beide Schmierbohrungen genutzt werden können. Zumindest für eine der Schmierbohrungen ist ausreichend Freiraum vorhanden, um Schmierleitungen oder dergleichen zuzuführen. Durch die beiden Schmierbohrungen besteht auch die Möglichkeit, das Lager und den Lagerraum mit Schmiermedium zu durchströmen. In weiteren Ausführungsformen können auch mehr als zwei Schmierbohrungen ausgebildet sein.

Eine besonders bevorzugte Ausführungsform ist dadurch gekennzeichnet, dass mindestens vier Schmierbohrungen im Grundkörper ausgebildet sind, wobei die vier Schmierbohrungen jeweils paarweise angeordnet sind, derart, dass jeweils zwei Schmierbohrungen eines ersten Schmierbohrungspaares den anderen beiden Schmierbohrungen des zweiten Schmierbohrungspaares diametral einander gegenüberliegen. Zwei Schmierbohrungen eines Paares liegen - bezogen auf die Mittelachse M des Grundkörpers - längsaxial nebeneinander und beabstandet zueinander. Die beiden Schmierbohrungspaare sind in Umfangsrichtung um 180° versetzt zueinander ausgebildet. Durch die Mehrzahl der Schmierbohrungen, deren paarweise Anordnung zueinander und die Positionierung der Schmierbohrungspaare einander gegenüberliegend ist ein Flanschlagergehäuse geschaffen, das für mehrere technische Anwendung und unterschiedliche Einbaupositionen universell einsatzbar ist. Das Flanschlagergehäuse ermöglicht den Einsatz in unterschiedlichen Anwendungsfällen, indem je nach Einbauposition unterschiedliche Schmierbohrungen oder Schmierbohrungspaare zum Schmieren der Lager zugänglich sind. Im Weiteren ermöglicht die erfindungsgemäße Ausbildung ein zuverlässiges und einfaches Reinigen, da unterschiedliche Schmiermediumpfade in den Lagerraum und durch den Lagerraum durch Schließen und Öffnen ausgewählter Schmierbohrungen wählbar sind. In weiteren Ausführungsformen können auch mehr als zwei Schmierbohrungspaare ausgebildet sein.

Vorteilhafterweise weist der Grundkörper eine Durchgangsöffnung in Richtung der Mittelachse M auf, wobei eine Innenfläche des Grundkörpers Anschlags- und/oder Passflächen für jedes Sicherungsmittel und jedes Lager umfasst, und wobei eine äußere Mantelfläche des Grundkörpers im Wesentlichen glatt und vorzugsweise konisch geformt ist. Im Wesentlichen glatt bedeutet im Zusammenhang mit dem erfindungsgemäßen Flanschlagergehäuse, dass die äußere Mantelfläche frei von Kanten, Vorsprüngen, Vertiefungen etc. ist, so dass sich keine Verunreinigungen an der äußeren Mantelfläche festsetzen können. Die äußere Mantelfläche kann zylindrisch ausgebildet/geformt sein, derart, dass die einander entgegengesetzten Stirnseiten den gleichen Durchmesser aufweisen. Bevorzugt weist die äußere Mantelfläche jedoch eine leicht konische Form/Ausbildung auf. Das bedeutet, dass die Mantelfläche ausgehend von einer Stirnseite zur entgegengesetzten Stirnseite eine leichte Neigung aufweist. Mit anderen Worten ist der Durchmesser einer ersten Stirnseite über Fertigungstoleranzen hinaus geringfügig größer als der Durchmesser einer zweiten, entgegengesetzten Stirnseite, beispielsweise im Verhältnis 9 zu 10. Diese konische Ausbildung/Form der Mantelfläche des Grundkörpers fällt aber noch unter den Begriff im Wesentlichen zylindrisch. Durch die abfallende Kontur der Mantelfläche zu einer Stirnseite wird ein zusätzlicher Freiraum geschaffen, der die Zugänglichkeit z.B. für Schmierleitungen zu den Schmierbohrungen vergrößert, wodurch sich das Flanschlagergehäuse an unterschiedlichen Einbaupositionen universell einbauen und mit Schmiermedium versorgen lässt.

Die Schmierbohrungen können mit ihrer Mittelachse S senkrecht zur Mittelachse M des Grundkörpers ausgerichtet sein. Vorteilhafterweise ist jede Schmierbohrung in einem Winkel β zur Mittelachse M des Grundkörpers ausgerichtet, wobei der Winkel β ungleich 90° ist. Mit dieser schrägen Ausrichtung der Schmierbohrungen zum Lagerraum wird die Zugänglichkeit ebenfalls vereinfacht, da die Schmierbohrungen mit ihrer Öffnung in Richtung einer Stirnseite weisen, so dass Schmierleitungen oder dergleichen einfacher anschließbar sind.

Besonders bevorzugt ist der Winkel β, der zwischen einer Mittelachse S der Schmierbohrung und der Mittelachse M des Grundkörpers eingeschlossen ist, kleiner 90°. Vorzugsweise ist die Mittelachse S der Schmierbohrungen zur schmalen Stirnseite des Grundkörpers geneigt. Andere Ausrichtungen und Neigungen sind aber ebenfalls möglich.

Eine besonders bevorzugte Weiterbildung ist dadurch gekennzeichnet, dass der Grundkörper mindestens an einer Stirnseite vier Befestigungsbohrungen aufweist, wobei die Befestigungsbohrungen jeweils in einem Abstand von 90° versetzt zueinander ausgebildet sind. Optional und vorteilhaft sind solche Befestigungsbohrungen an beiden Stirnseiten vorgesehen, so dass eine beidseitige Montage z.B. an einer Gehäusewand gewährleistet ist, um die universelle Einbaubarkeit zu verbessern. Anders ausgedrückt kann das Flanschlagergehäuse von zweiten Seiten z.B. an eine Gehäusewand angeflanscht werden. Die Anzahl der Befestigungsbohrungen sowie deren Abstände zueinander können selbstverständlich variieren. Die Befestigungsbohrungen oder andere Fixierelemente können direkt im Grundkörper oder einem dem Grundkörper zugeordneten Flanschelement ausgebildet und angeordnet sein. Die Mittelachsen B der Befestigungsbohrungen sind vorzugsweise parallel zur Mittelachse M des Grundkörpers ausgerichtet. Die Bohrbilder auf beiden Stirnseiten entsprechen sich. Dadurch ist eine einfache Montage auf beiden Seiten gewährleistet. Durch den möglichen Wechsel der Seite des Anschlusses sowie die vier verschiedenen Einbaupositionen aufgrund der im Abstand von 90° ausgebildeten Befestigungsbohrungen ergeben sich unterschiedliche Einbaumöglichkeiten für unterschiedliche technische Anwendungen mit einer optimierten Zugänglichkeit. Die beiden entgegengesetzten Bohrbilder können allerdings auch unterschiedlich sein, und zwar bezüglich der Anzahl und/oder des Abstandes der Befestigungsbohrungen zueinander und/oder der Position der gesamten Bohrbilder.

Vorteilhafterweise sind beide Stirnseiten des Grundkörpers wahlweise zum Aufnehmen eines Dichtelementes und/oder zum Aufnehmen eines Blinddeckels ausgebildet und eingerichtet. Als Dichtelemente kommen u.a. die Wellendichtringe in Betracht, z.B. für den Fall, dass eine Welle z.B. durchgängig im Flanschlagergehäuse gelagert ist. Die Ausbildung zur Aufnahme eines Blinddeckels ist vorgesehen für den Fall, dass die Welle nur von einer Seite in das Flanschlagergehäuse eingeführt und in diesem gelagert ist. Der Blinddeckel schließt den Lagerraum zu der entgegengesetzten Stirnseite ab. Die Stirnseiten können wie erwähnt einen identischen Durchmesser aufweisen. Bei einem leicht konischen Verlauf der äußeren Mantelfläche des Grundkörpers können die vorgesehenen Blinddeckel auch verschieden groß sein.

An mindestens einer Stirnseite des Grundkörpers kann eine Nut ausgebildet sein, in die ein O-Ring eingesetzt ist. Mit diesem O-Ring kann die Anlage des Flanschlagergehäuses z.B. an einer Gehäusewand optimiert werden, indem z.B. Unebenheiten ausgeglichen werden. Ein solcher O-Ring oder auch andere Ausgleichsmittel können auch beidseitig am Grundkörper ausgebildet und vorgesehen sein.

Zweckmäßigerweise kann an mindestens einer Stirnseite des Grundkörpers eine Passung ausgebildet sein, in die ein Blinddeckel dichtend eingesetzt ist. Eine solche Passung mit einem optional einzusetzenden Blinddeckel kann auch beidseitig am Grundkörper ausgebildet und vorgesehen sein.

Eine besonders vorteilhafte Ausführungsform ist dadurch gekennzeichnet, dass zusätzlich zu jedem Wellendichtring, der zum Dichten des Lagerraums von innen nach außen ausgebildet und eingerichtet ist, ein Staublippendichtring vorgesehen ist, der zum Dichten des Lagerraums von außen nach innen ausgebildet und eingerichtet ist. Jeder Wellendichtring ist mit einer Dichtlippe nach innen (zum Lagerraum) gerichtet, so dass verhindert wird, dass Schmiermedium aus dem Lagerraum ausläuft. Jeder Staublippendichtring ist quasi vor dem Wellendichtring platziert, so dass der Wellendichtring zwischen Staublippendichtring und Sicherungsmittel bzw. Lagerraum liegt. Eine Dichtlippe vom Staublippendichtring ist nach außen gerichtet, so dass verhindert wird, dass von außen Staub, Dreck oder dergleichen in den Lagerraum gelangt. Die nach innen und außen gerichteten Dichtlippen können an einem gemeinsamen Dichtring mit Doppelfunktion angeordnet sein. Bevorzugt sind Wellendichtring und Staublippendichtring separate Dichtringe, zwischen denen ein Schmutzfangraum gebildet ist. Trotz Wellendichtring und Staublippendichtring kommt es im Betrieb der Flanschlagergehäuse zu Verunreinigungen im Bereich der Dichtringe und insbesondere auch im Lagerraum, weshalb eine regelmäßige Reinigung und Spülung sinnvoll ist.

Die Aufgabe wird auch durch ein eingangs genanntes Verfahren mit den folgenden Schritten gelöst: Aufschieben einer Reinigungshülse auf die Welle bis an das Flanschlagergehäuse heran, Eindringen der Reinigungshülse mit einem vorauslaufenden Rand unter einen Wellendichtring des Flanschlagergehäuses durch weiteres Schieben der Reinigungshülse in Richtung des Flanschlagergehäuses, wobei der Wellendichtring des Flanschlagergehäuses beim Eindringen der Reinigungshülse zerstörungsfrei angehoben wird, und Herausziehen der Reinigungshülse aus dem Wellendichtring und dem Flanschlagergehäuse insgesamt, wobei die Reinigungshülse beim Aufschieben und/oder Eindringen und/oder Herausziehen relativ zur Welle gedreht wird. Mit diesem Verfahren wird auf einfache und effektive Weise der Bereich unterhalb des Wellendichtrings, also der Bereich zwischen Wellendichtring und Welle, gereinigt. Der vorauslaufende Rand der Reinigungshülse bewirkt durch seine Kontur in Verbindung mit dem drehenden Aufschieben ein Anheben des Wellendichtrings, wodurch ein weiteres Eindringen unter den Wellendichtring ohne Beschädigung des Wellendichtrings gewährleistet ist. Durch das Anheben des Wellendichtrings einerseits und das aus dem Lagerraum nach außen drückende Schmiermedium andererseits wird der Bereich unterhalb des Wellendichtrings gespült und damit von Verunreinigungen befreit.

Vorteilhafterweise wird die Reinigungshülse bis in den Lagerraum hineingeschoben, derart, dass ein Durchgang aus dem Lagerraum zur Umgebung gebildet wird. Mit dieser Vorgehensweise werden noch bessere Reinigungs- und Spülergebnisse erreicht.

Ein besonders vorteilhaftes Verfahren ist dadurch gekennzeichnet, dass beim Einsatz der Reinigungshülse, insbesondere während sich die Reinigungshülse innerhalb des Lagerraums befindet, über die oder jede Schmierbohrung des Flanschlagergehäuses Schmiermedium in den Lagerraum gedrückt wird. Dadurch wird der Spülvorgang aktiv von innen nach außen unterstützt, um zum einen das Reinigungs- und Spülergebnis zu optimieren, und zum anderen das Lager optimal zu schmieren.

Weitere sich daraus ergebende Vorteile wurden bereits im Zusammenhang mit dem Flanschlagergehäuse beschrieben, weshalb zur Vermeidung von Wiederholungen auf die obigen Passagen verwiesen wird.

Weitere zweckmäßige und/oder vorteilhafte Merkmale und Weiterbildungen des Flanschlagergehäuses sowie des Verfahrens ergeben sich aus den Unteransprüchen und der Beschreibung. Eine besonders bevorzugte Ausführungsform des Erfindungsgegenstands wird anhand der beigefügten Zeichnung näher erläutert. In der Zeichnung zeigt:
- Fig. 1: eine schematische Darstellung des erfindungsgemäßen Flanschlagergehäuses in perspektivischer Ansicht,
- Fig. 2: das Flanschlagergehäuse gemäß Figur 1 in einer Schnittdarstellung in Seitenansicht,
- Fig. 3: das Flanschlagergehäuse gemäß Figur 2 in Vorderansicht,
- Fig. 4: das Flanschlagergehäuse gemäß Figur 2 in einer um 45° um die Mittelachse M gedrehten Schnittdarstellung,
- Fig. 5 a) bis f): eine schematische Schnittdarstellung des Flanschlagergehäuses in unterschiedlichen Anwendungsfällen, wobei der Pfeil den Schmiermediumstrom darstellt, und
- Fig. 6: eine weitere Ausführungsform eines erfindungsgemäßen Flanschlagergehäuses in Schnittdarstellung.

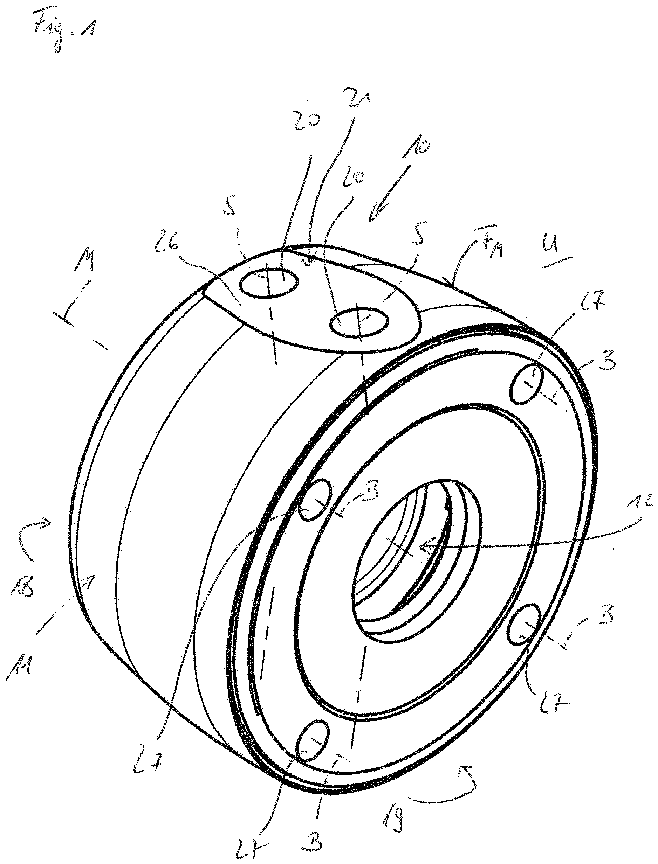

Ein in den Figuren 1 bis 6 dargestelltes Flanschlagergehäuse ist zum Lagern und Dichten von rotierenden Wellen in Vorrichtungen der geflügel- und fischverarbeitenden Industrie ausgebildet und eingerichtet. Das Flanschlagergehäuse ist ebenfalls zum Einsatz in anderen Vorrichtungen der nahrungsmittelverarbeitenden Industrie ausgebildet und eingerichtet.

Das Flanschlagergehäuse 10 umfasst einen als im Wesentlichen hohlzylindrischen Rotationskörper ausgebildeten Grundkörper 11 und einen innerhalb des Grundkörpers 11 ausgebildeten Lagerraum 12. Der Lagerraum 12 ist zur Aufnahme mindestens eines Lagers 13 sowie einer zu lagernden und zu dichtenden Welle 14 ausgebildet und eingerichtet. Weiterhin umfasst das Flanschlagergehäuse 10 mindestens ein Lager 13, mindestens ein im Lagerraum 12 am Grundkörper 11 angeordnetes oder ausgebildetes erstes Sicherungsmittel 15 als Anschlag für das Lager 13, mindestens ein weiteres am Grundkörper 11 angeordnetes oder ausgebildetes zweites Sicherungsmittel 16 zum Sichern des Lagers 13 gegen das erste Sicherungsmittel 15, sowie mindestens einen Wellendichtring 17, wobei der oder jeder Wellendichtring 17 auf der dem Lager 13 abgewandten Seite des jeweiligen Sicherungsmittels 16 angeordnet ist.

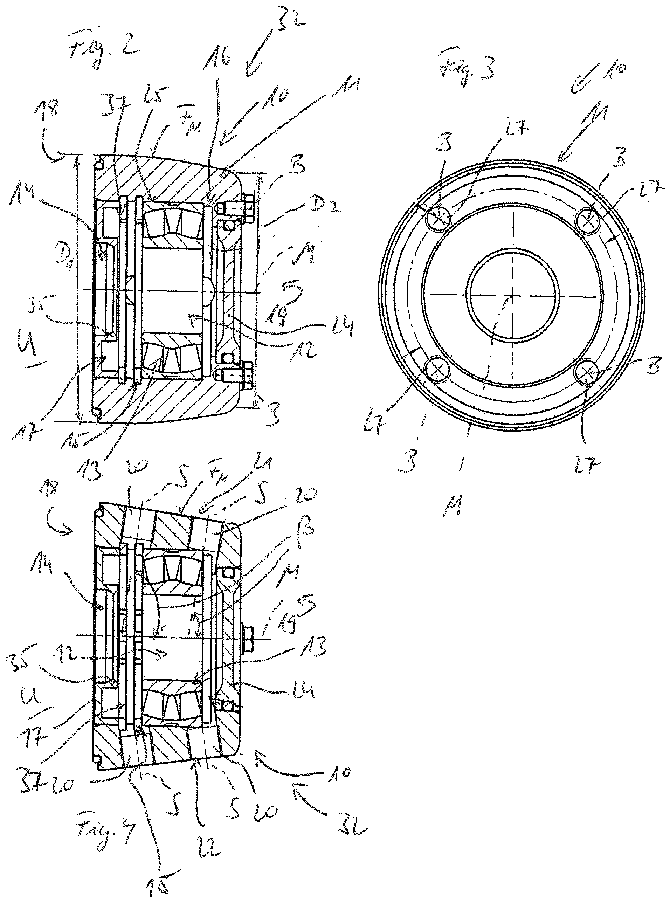

In der Ausführungsform der Figur 1 ist das Flanschlagergehäuse 10 zur Aufnahme der Welle 14 ausgebildet, die zu beiden Stirnseiten 18, 19 aus dem Grundkörper 11 ragt. In der Ausführungsform der Figuren 2 bis 6 ist das Flanschlagergehäuse 10 auf der einen Stirnseite 19 bzw. 18 geschlossen, was weiter unten detailliert beschrieben wird, so dass die Welle 14 nur aus einer Stirnseite 18 bzw. 19 aus dem Flanschlagergehäuse 10 ragt.

Dieses Flanschlagergehäuse 10 zeichnet sich erfindungsgemäß dadurch aus, dass mindestens zwei Schmierbohrungen 20 im Grundkörper 11 ausgebildet sind, die den Lagerraum 12 mit der Umgebung U verbinden, wobei die Schmierbohrungen 20 beabstandet zueinander, vorzugsweise diametral einander gegenüberliegend, am Umfang des Grundkörpers 11 angeordnet und ausgebildet sind, und die oder jede Schmierbohrung 20 bedarfsweise zu öffnen und schließbar ausgebildet ist.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder den Figuren zusammengefasst oder in einer gemeinsamen Ausführungsform beschrieben sind, auch funktional eigenständig das weiter oben beschriebene Flanschlagergehäuse 10 weiterbilden können.

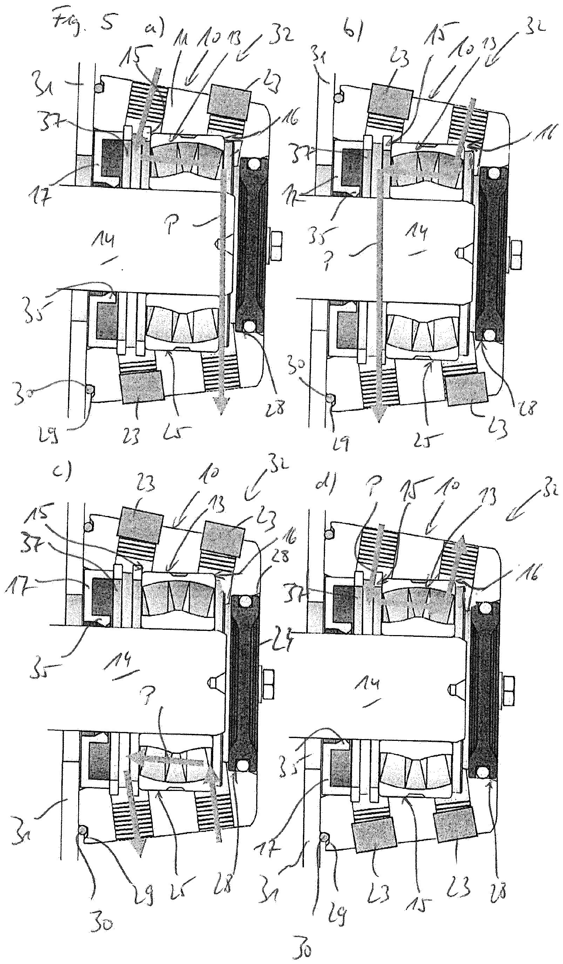

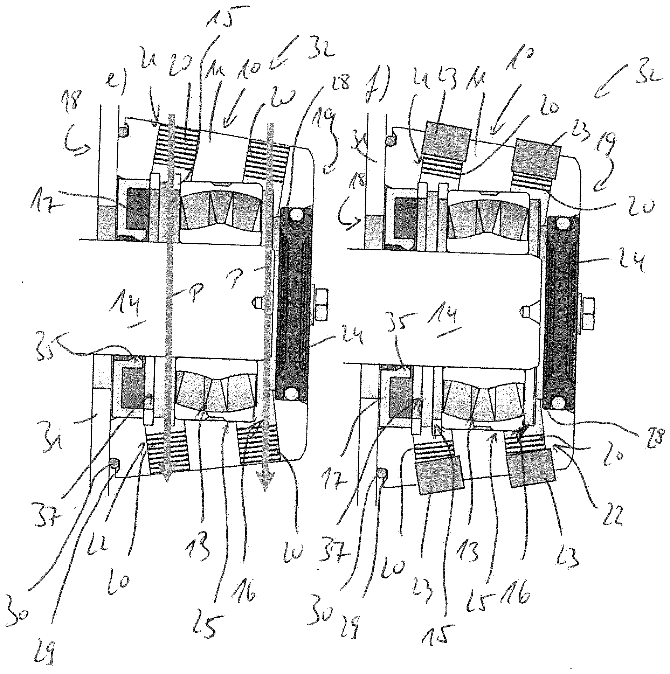

Wie den dargestellten Ausführungsformen insbesondere in Figuren 4 und 5 zu entnehmen ist, sind vier Schmierbohrungen 20 im Grundkörper 11 ausgebildet, wobei die vier Schmierbohrungen 20 jeweils paarweise angeordnet sind, derart, dass jeweils zwei Schmierbohrungen 20 eines ersten Schmierbohrungspaares 21 den anderen beiden Schmierbohrungen 20 des zweiten Schmierbohrungspaares 22 diametral einander gegenüberliegen. Jede Schmierbohrung 20 kann offen sein, um z.B. Schmiermedium in den Lagerraum 13 zu drücken. Jede Schmierbohrung 20 ist auch verschließbar, z.B. mittels eines steckbaren oder schraubbaren Stopfens 23. Die unterschiedlichen Anwendungsfälle mit den jeweiligen Schmiermedienströmen gemäß Pfeil P sind den Figuren 5a) bis f) zu entnehmen.

Bei der Ausführungsform gemäß Figur 1 ist das Lager 13 zwischen zwei Federringen als Sicherungsmittel 15, 16 angeordnet. Bei der Ausführungsform der Figuren 2 bis 5 ist das Lager 13 zwischen einem Federring als erstem Sicherungsmittel 15 und einem im Grundkörper 16 gebildeten Anschlag als zweitem Sicherungsmittel 16 angeordnet. Während die eine Stirnseite 18 des Grundkörpers 11 offen ausgebildet ist, um die Welle 14 aufzunehmen, ist die entgegengesetzte Stirnseite 19 durch einen lösbar am Grundkörper 11 befestigten Blinddeckel 24 verschlossen. Anstelle des Anschlags als zweitem Sicherungsmittel 16 können auch andere Sicherungselemente eingesetzt werden. Der Wellendichtring 17 kann des Weiteren zum Beispiel durch einen Federring oder dergleichen als Sicherungsmittel 37 gesichert sein.

Der Grundkörper 11 weist zur Bildung des Lagerraums 12 eine Durchgangsöffnung bzw. einen Durchgangskanal in Richtung der Mittelachse M auf, wobei eine Innenfläche des Grundkörpers 11 Anschlags- und/oder Passflächen 25 für jedes Sicherungsmittel 15, 16 und jedes Lager 13 und ggf. auch jedes Dichtelement umfasst, und wobei eine äußere Mantelfläche F_{M} des Grundkörpers 11 im Wesentlichen glatt und vorzugsweise konisch geformt ist. Der vorzugsweise aus Edelstahl oder einem anderen in der nahrungsmittelverarbeitenden Industrie zugelassenen Werkstoff hergestellte Grundkörper 11 weist an der einen Stirnseite 18 einen Durchmesser D, auf, der größer ist als der Durchmesser D₂ an der entgegengesetzten Stirnseite 19. Die Schmierbohrungen 20 sind im Bereich der Mantelfläche Fnn des Grundkörpers 11 ausgebildet, vorzugsweise im Bereich einer Abflachung 26 im Bereich der ansonsten zylindrischen Mantelfläche Fnn. Jede Schmierbohrung 20 ist in einem Winkel β zur Mittelachse M des Grundkörpers 11 ausgerichtet, wobei der Winkel β ungleich 90° ist. Letztlich ist der Winkel β, der zwischen einer Mittelachse S der Schmierbohrung 20 und der Mittelachse M des Grundkörpers 11 eingeschlossen ist, kleiner 90°.

Wie den Figuren beispielhaft zu entnehmen ist, weist der Grundkörper 11 mindestens an einer Stirnseite 19 vier Befestigungsbohrungen 27 auf, wobei die Befestigungsbohrungen 27 jeweils in einem Abstand von 90° versetzt zueinander ausgebildet sind. Bevorzugt sind solche Befestigungsbohrungen 27 auf beiden Stirnseiten 18, 19 ausgebildet, um das Flanschlagergehäuse 10 auf beiden Seiten, also an unterschiedlichen Einbauplätzen, z.B. an einer Gehäusewand 31 befestigen zu können. Die Mittelachsen B der Befestigungsbohrungen 27 sind parallel zur Mittelachse M des Grundkörpers 11 ausgerichtet. In Bezug zu den Schmierbohrungen 20 sind die Befestigungsbohrungen 27 versetzt angeordnet, vorzugsweise in einem Abstand von 45°. Für eine universelle Anwendung sind auch beide Stirnseiten 18, 19 des Grundkörpers 11 wahlweise zum Aufnehmen eines Dichtelementes, also z.B. eines Wellendichtrings 17, und/oder zum Aufnehmen eines Blinddeckels 24 ausgebildet und eingerichtet. Für einen Blinddeckel 24 ist an mindestens einer Stirnseite 19 des Grundkörpers 11, vorzugsweise jedoch an beiden Stirnseiten 18, 19, eine Passung 28 ausgebildet, in die der Blinddeckel 24 bei Bedarf einsetzbar und lösbar befestigbar ist. Im gezeigten Ausführungsbeispiel z.B. gemäß der Figuren 2 bis 5 ist der Blinddeckel 24 auf der Stirnseite 19 dichtend befestigt. Zusätzlich kann an mindestens einer Stirnseite 18 des Grundkörpers 11, vorzugsweise jedoch an beiden Stirnseiten 18, 19, eine Nut 29 ausgebildet sein, in die ein O-Ring 30 eingesetzt ist. Andere und/oder zusätzliche Dicht- und/oder Ausgleichselemente können an einer Stirnseite 18 oder 19 oder an beiden Stirnseiten 18, 19 vorgesehen sein.

In montiertem Zustand des Flanschlagergehäuses 10 mit gelagerter Welle 14, wie es in den Figuren 5 a) bis f) dargestellt ist, ist das Flanschlagergehäuse 10 mit der Stirnseite 18 an der Gehäusewand 31 einer nicht dargestellten Vorrichtung befestigt. Das Flanschlagergehäuse 10 und die Welle 14 bilden eine gemeinsame Anordnung 32. Der O-Ring 30 sorgt für eine gute Anlage des Flanschlagergehäuses 10 an der Gehäusewand 31. Der Wellendichtring 17 ist auf der Stirnseite 18 angeordnet, mit der das Flanschlagergehäuse 10 an der Gehäusewand 31 befestigt ist. Eine Lippe 35 des Wellendichtrings 17 ragt nach innen in Richtung des Sicherungsmittels 15.

In den unterschiedlichen Ausführungen gemäß 5 a) bis f) sind unterschiedliche Betriebspositionen dargestellt, um wahlweise z.B. mindestens zwei nebeneinanderliegende oder zwei einander direkt oder schräg gegenüberliegende Schmierbohrungen 20 miteinander zu verbinden, während die übrigen Schmierbohrungen 20 mittels des Stopfens verschlossen sind. Es können auch alle Schmierbohrungen 20 offen oder geschlossen sein. Dadurch sind unterschiedliche Pfade für den Schmiermediumstrom in das und durch den Lagerraum 12 gemäß Pfeil P realisierbar.

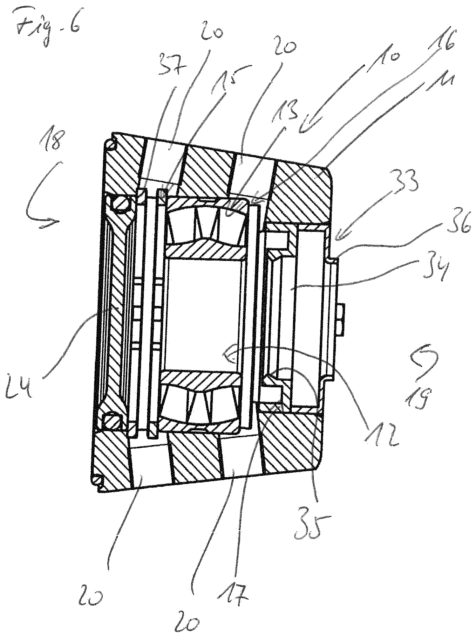

Im Ausführungsbeispiel gemäß Figur 6 ist der Blinddeckel 24 auf der Stirnseite 18 angeordnet und durch das Sicherungsmittel 37 gesichert. Die Welle 14 ragt demnach auf der Stirnseite 19 aus dem Grundkörper 11 heraus. Wie insbesondere der Figur 6 zu entnehmen ist, kann zusätzlich zu jedem Wellendichtring 17, der in diesem Beispiel auf der Stirnseite 19 platziert ist, zum Dichten des Lagerraums 12 von innen nach außen ausgebildet und eingerichtet ist, ein Staublippendichtring 33 vorgesehen sein, der zum Dichten des Lagerraums 12 von außen nach innen ausgebildet und eingerichtet ist. Jeder Staublippendichtring 33 ist einem Wellendichtring 17 zugeordnet und auf der Welle 14 an den Wellendichtring 17 geschoben, so dass zwischen dem Staublippendichtring 33 und dem Wellendichtring 17 ein Schmutzfangraum 34 gebildet ist. Eine Lippe 36 des Staublippendichtrings 33 ist nach außen in Richtung der Stirnseite 19 gerichtet.

Die Erfindung betrifft auch ein Verfahren zum Reinigen und/oder Spülen einer aus einer in einem Flanschlagergehäuse 10 nach einem der Ansprüche 1 bis 10 gelagerten Welle 14 gebildeten Anordnung 32.

Dieses Verfahren zeichnet sich erfindungsgemäß dadurch aus, dass eine Reinigungshülse auf die Welle 14 bis an das Flanschlagergehäuse 10 heran aufgeschoben wird. Durch das Aufschieben der Reinigungshülse in Richtung des Flanschlagergehäuses 10 dringt die Reinigungshülse mit einem vorauslaufenden Rand unter einen Wellendichtring 17 des Flanschlagergehäuses 10. Beim Eindringen der Reinigungshülse wird der Wellendichtring 17 des Flanschlagergehäuses 10 durch eine entsprechende Kontur des Randes der Reinigungshülse zerstörungsfrei angehoben. Nachdem die Reinigungshülse mindestens teilweise unter den Wellendichtring geschoben wurde, wird die Reinigungshülse aus dem Wellendichtring 17 und dem Flanschlagergehäuse 10 insgesamt herausgezogen. Die Reinigungshülse wird beim Aufschieben und/oder Eindringen und/oder Herausziehen relativ zur Welle gedreht, vorzugsweise während des gesamten Reinigungsprozesses.

Vorzugsweise wird die Reinigungshülse - drehend - bis in den Lagerraum 12 hineingeschoben, derart, dass ein Durchgang aus dem Lagerraum 12 zur Umgebung U gebildet wird. Dadurch kann Schmiermedium aus dem Lagerraum 12 auf der Welle 14 in die Umgebung strömen und dabei sowohl den Lagerraum 12 aber insbesondere auch den Bereich zwischen Wellendichtring 17 und Welle 14 reinigen bzw. freispülen. Dieser Reinigungs- bzw. Spülvorgang kann optimiert werden, indem beim Einsatz der Reinigungshülse, insbesondere während sich die Reinigungshülse innerhalb des Lagerraums 12 befindet, über die oder jede Schmierbohrung 20 des Flanschlagergehäuses 10 Schmiermedium in den Lagerraum 12 gedrückt wird.

## Patentansprüche

1. Flanschlagergehäuse (10), ausgebildet und eingerichtet zum Lagern und Dichten von rotierenden Wellen (14) innerhalb von Vorrichtungen der nahrungsmittelverarbeitenden Industrie, insbesondere der Fisch- und Geflügelverarbeitung, umfassend einen als im Wesentlichen hohlzylindrischen Rotationskörper ausgebildeten Grundkörper (11), einen innerhalb des Grundkörpers (11) ausgebildeten Lagerraum (12), ausgebildet und eingerichtet zur Aufnahme mindestens eines Lagers (13) sowie einer zu lagernden und zu dichtenden Welle (14), das mindestens eine Lager (13), mindestens ein im Lagerraum (12) am Grundkörper (11) angeordnetes oder ausgebildetes erstes Sicherungsmittel (15) als Anschlag für das Lager (13), mindestens ein weiteres am Grundkörper (11) angeordnetes oder ausgebildetes zweites Sicherungsmittel (16) zum Sichern des Lagers (13) gegen das erste Sicherungsmittel (15), sowie mindestens einen Wellendichtring (17), wobei der oder jeder Wellendichtring (17) auf der dem Lager (13) abgewandten Seite des jeweiligen Sicherungsmittels (15) angeordnet ist, **dadurch gekennzeichnet, dass** mindestens zwei Schmierbohrungen (20) im Grundkörper (11) ausgebildet sind, die den Lagerraum (13) mit der Umgebung (U) verbinden, wobei die Schmierbohrungen (20) beabstandet zueinander, vorzugsweise diametral einander gegenüberliegend, am Umfang des Grundkörpers (11) angeordnet und ausgebildet sind, und die oder jede Schmierbohrung (20) bedarfsweise zu öffnen und schließbar ausgebildet ist.

2. Flanschlagergehäuse (10) nach Anspruch 1, **dadurch gekennzeichnet, dass** mindestens vier Schmierbohrungen (20) im Grundkörper (11) ausgebildet sind, wobei die vier Schmierbohrungen (20) jeweils paarweise angeordnet sind, derart, dass jeweils zwei Schmierbohrungen (20) eines ersten Schmierbohrungspaares (21) den anderen beiden Schmierbohrungen (20) des zweiten Schmierbohrungspaares (22) diametral einander gegenüberliegen.

3. Flanschlagergehäuse (10) nach Anspruch 1 oder 2, **dadurch gekennzeichnet, dass** der Grundkörper (11) eine Durchgangsöffnung in Richtung der Mittelachse (M) aufweist, wobei eine Innenfläche des Grundkörpers (11) Anschlags- und/oder Passflächen (25) für jedes Sicherungsmittel (15, 16) und jedes Lager (13) umfasst, und wobei eine äußere Mantelfläche (F_{M}) des Grundkörpers (11) im Wesentlichen glatt und vorzugsweise konisch geformt ist.

4. Flanschlagergehäuse (10) nach einem der Ansprüche 1 bis 3, **dadurch gekennzeichnet, dass** jede Schmierbohrung (20) in einem Winkel β zur Mittelachse (M) des Grundkörpers (11) ausgerichtet ist, wobei der Winkel β ungleich 90° ist.

5. Flanschlagergehäuse (10) nach Anspruch 4, **dadurch gekennzeichnet, dass** der Winkel β, der zwischen einer Mittelachse (S) der Schmierbohrung (20) und der Mittelachse (M) des Grundkörpers (11) eingeschlossen ist, kleiner 90° ist.

6. Flanschlagergehäuse (10) nach einem der Ansprüche 1 bis 5, **dadurch gekennzeichnet, dass** der Grundkörper (11) mindestens an einer Stirnseite (18, 19) vier Befestigungsbohrungen (27) aufweist, wobei die Befestigungsbohrungen (27) jeweils in einem Abstand von 90° versetzt zueinander ausgebildet sind.

7. Flanschlagergehäuse (10) nach einem der Ansprüche 1 bis 6, **dadurch gekennzeichnet, dass** beide Stirnseiten (18, 19) des Grundkörpers (11) wahlweise zum Aufnehmen eines Dichtelementes und/oder zum Aufnehmen eines Blinddeckels (24) ausgebildet und eingerichtet sind.

8. Flanschlagergehäuse (10) nach einem der Ansprüche 1 bis 7, **dadurch gekennzeichnet, dass** an mindestens einer Stirnseite (18) des Grundkörpers (11) eine Nut (29) ausgebildet ist, in die ein O-Ring (30) eingesetzt ist.

9. Flanschlagergehäuse (10) nach einem der Ansprüche 1 bis 8, **dadurch gekennzeichnet, dass** an mindestens einer Stirnseite (19) des Grundkörpers (11) eine Passung (28) ausgebildet ist, in die ein Blinddeckel (24) dichtend eingesetzt ist.

10. Flanschlagergehäuse (10) nach einem der Ansprüche 1 bis 9, **dadurch gekennzeichnet, dass** zusätzlich zu jedem Wellendichtring (17), der zum Dichten des Lagerraums (12) von innen nach außen ausgebildet und eingerichtet ist, ein Staublippendichtring (33) vorgesehen ist, der zum Dichten des Lagerraums (12) von außen nach innen ausgebildet und eingerichtet ist.

11. Verfahren zum Reinigen und/oder Spülen einer aus einer in einem Flanschlagergehäuse (10) nach einem der Ansprüche 1 bis 10 gelagerten Welle (14) gebildeten Anordnung (100), **gekennzeichnet durch** die Schritte:
- Aufschieben einer Reinigungshülse auf die Welle (14) bis an das Flanschlagergehäuse (10) heran,
- Eindringen der Reinigungshülse mit einem vorauslaufenden Rand unter einen Wellendichtring (17) des Flanschlagergehäuses (10) durch weiteres Schieben der Reinigungshülse in Richtung des Flanschlagergehäuses (10),
- wobei der Wellendichtring (17) des Flanschlagergehäuses (10) beim Eindringen der Reinigungshülse zerstörungsfrei angehoben wird, und
- Herausziehen der Reinigungshülse aus dem Wellendichtring (17) und dem Flanschlagergehäuse (10) insgesamt,
- wobei die Reinigungshülse beim Aufschieben und/oder Eindringen und/oder Herausziehen relativ zur Welle (14) gedreht wird.

12. Verfahren nach Anspruch 11, **dadurch gekennzeichnet, dass** die Reinigungshülse bis in den Lagerraum (12) hineingeschoben wird, derart, dass ein Durchgang aus dem Lagerraum (12) zur Umgebung (U) gebildet wird.

13. Verfahren nach Anspruch 11 oder 12, **dadurch gekennzeichnet, dass** beim Einsatz der Reinigungshülse, insbesondere während sich die Reinigungshülse innerhalb des Lagerraums (12) befindet, über die oder jede Schmierbohrung (20) des Flanschlagergehäuses (10) Schmiermedium in den Lagerraum (12) gedrückt wird.
